# EUROPEAN PATENT APPLICATION

(11) **EP 1 227 676 A2**
(43) Date of publication of application: **31.07.2002**
(21) Application number: 02250588.7
(22) Date of filing: 25.01.2002
(51) Int. Cl.: H04N 5/445

(54) **Method of selecting among multiply-categorised items**

(30) Priority: 25.01.2001 US 264269 P
(71) Applicant: Ensequence, Inc., Portland, Oregon 97204 (US)
(72) Inventor: Wallace, Michael W., Vancouver, Washington 98683 (US)
(74) Representative: Nicholls, Michael John

(57) **Abstract**

A method for selecting content for play comprises allowing selection by a user of two or more top-level categories from a list of categories where at least one of a plurality of media content items are associated with two or more top-level categories. A list of only those media content items associated with all of the two or more top-level categories selected by the user are presented for selection and play.

## Description

### BACKGROUND OF THE INVENTION

The present invention relates to computer data processing, more specifically, to the interactive selection of items from a list.

One of the common operations performed by users of information systems is the selection of items from a collection of items. Often this selection process is guided by the use of categorization information for the items. An example of such a selection process is the choosing of television programs from an electronic program guide. Some Systems attempt to simplify this process by providing genre information about programs. For example, a viewer might request a list of all sports programs, or all mystery movies.

Movies and television programs, however, are not typically well characterized by a single such description. As an example, the use of the term 'dramedy' is often used to describe television shows or movies that contain elements of drama and comedy. Similarly, a science-fiction movie may also be a mystery, or an action adventure. Current selection interfaces deal with this problem by presenting a hierarchy of choices. At the top level, the single basic category selection is made, for example, drama, comedy, and science fiction. Following this selection, a selection submenu is provided which lists all subcategories available within that category. A selection on this submenu may lead to further sub-submenus, and so on until a final selection is made. A principal difficulty with this technique is having to guess what the 'primary' category is for a given movie. In order to avoid this possibility, the system may construct the submenu from all the alternatives available in each item that matches the first categorization, with the result that the submenu is nearly as extensive as the original menu. Thus, the use of sequential categories and sub-categories to search for a particular item of interest may be inefficient.

Accordingly, the need remains for a system that permits the specification of a combination of attributes when searching for a suitable selection within a set of options.

### SUMMARY OF THE INVENTION

The current disclosure describes a method that permits the choice of multiple attributes at each level of selection, thus more rapidly and efficiently narrowing the search to a desired set of items. Furthermore, the method permits the aggregation of attributes at various levels of detail, thus maintaining sensitivity in the search without unneccssarily eliminating potential matches.

### BRIEF DESCRIPTION OF THE DRAWINGS

FIG. 1 illustrates a category selection menu implemented on a display screen according to the present invention.
FIG. 2 is a schematic diagram of exemplary navigation buttons used to make the category selections shown in FIGs. 3 and 4.
FIG. 3 illustrates the menu of FIG. 1 with a first set of multiple categories selected.
FIG. 4 illustrates the menu of FIG. 1 with a second set of multiple categories selected.
FIG. 5 is a table showing the multiple categorization of a plurality of movie content.
FIG. 6 is a flow diagram illustrating the operation of the methods according to a preferred embodiment of the invention.

### DETAILED DESCRIPTION

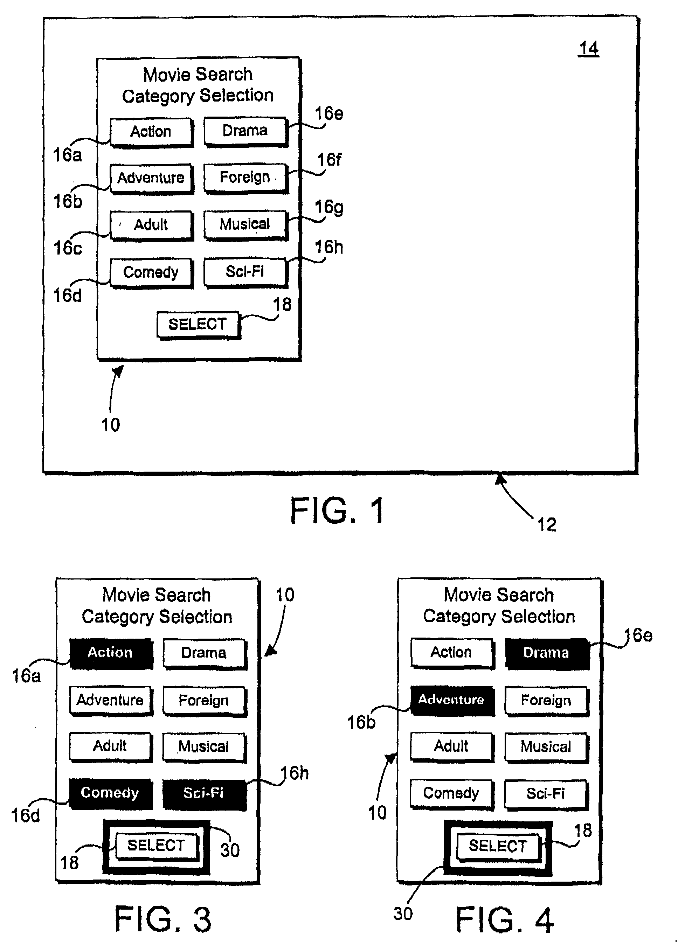

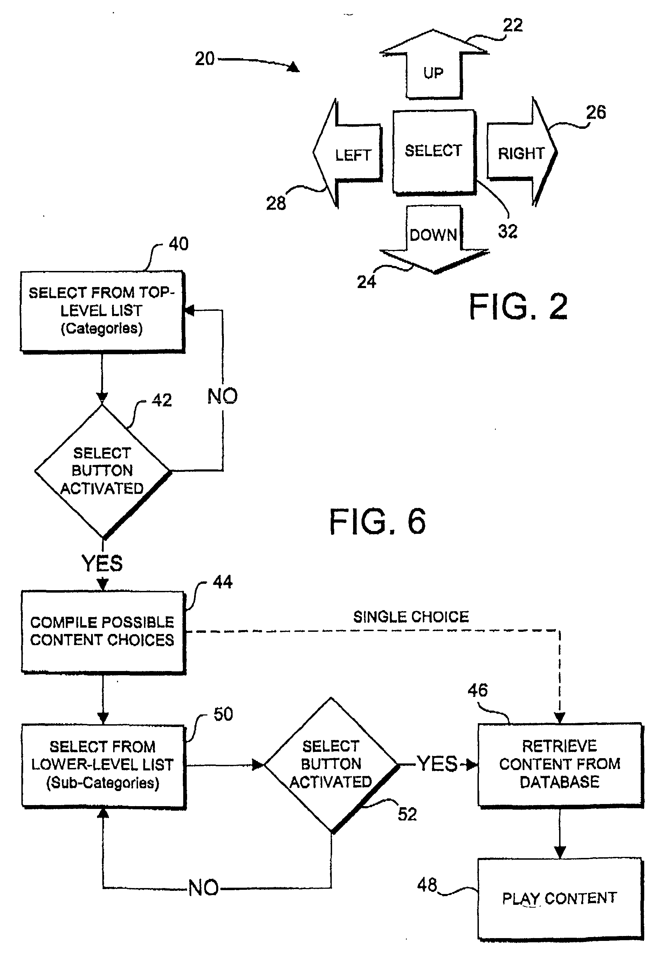

FIG. 1 shows a typical screen view of an interactive interface for the selection of items from a catalog of video titles. The menu box 10 is displayed within a video window 14 on a video screen, such as on display 12, where the content is to be viewed. It is desired that menu box 10 be superimposed on the video content displayed within video window 14, although it is understood that other methods can be used such as alpha blending to impart partial transparency to menu box 10.

Menu box 10 is shown in FIG. 1 with a list of topic categories associated with movie content. The list shown is not intended to be exhaustive and it is understood that other topics, or even categories, would be possible. Each topic is displayed within an annotated button 16. The exemplary topic menu shown in FIG. 1 includes eight such buttons 16a-16h. Each of these buttons is selected as described below so that one or more buttons are simultaneously active. Once the desired topic buttons have been activated, the user activates 'select' button 18 to confirm the topic choices made and to cause the system to compile a list of possible content satisfying the topic criteria selected.

FIG. 2 illustrates the user interface selection buttons at 20 associated with a remote control or the like that may be used in conjunction with the system to select the desired categories from the menu of FIG. 1. A user can toggle between the topic selection buttons 16a-16b using the directional buttons 22 (up), 24 (down), 26 (right) and 28 (left). A visual indication is given to the user to indicate which button is currently highlighted, shown in FIGs. 3 and 4 as a black box 30 surrounding the highlighted button. A remote control select button 32, here centrally located between directional buttons 22, 24, 26, 28, causes the highlighted button to become a selected button when activated. Selected buttons are shown in FIGs. 3 and 4 as those having a black background with white letters - that is, buttons 16a, 16d, and 16h in FIG. 3; and buttons 16b and 16e in FIG. 4.

The illustration in FIG. 1 assumes that the user has made a choice of topic selection, which results in a list of topic categories being provided, at least some of which are non-exclusive. In a conventional program guide, only one selection would be permissible, and a list of items matching that selection would be presented. In contrast, the disclosed system allows multiple selections to be made from the topic category list. Navigation among the choices, and selection/deselection of choices, would be performed by use of the buttons 20 on the remote control for the television or set-top box. Once the criteria are selected, the selection process is confirmed as by activating select button 18 and the system provides a list of items matching all the top-level selection criteria.

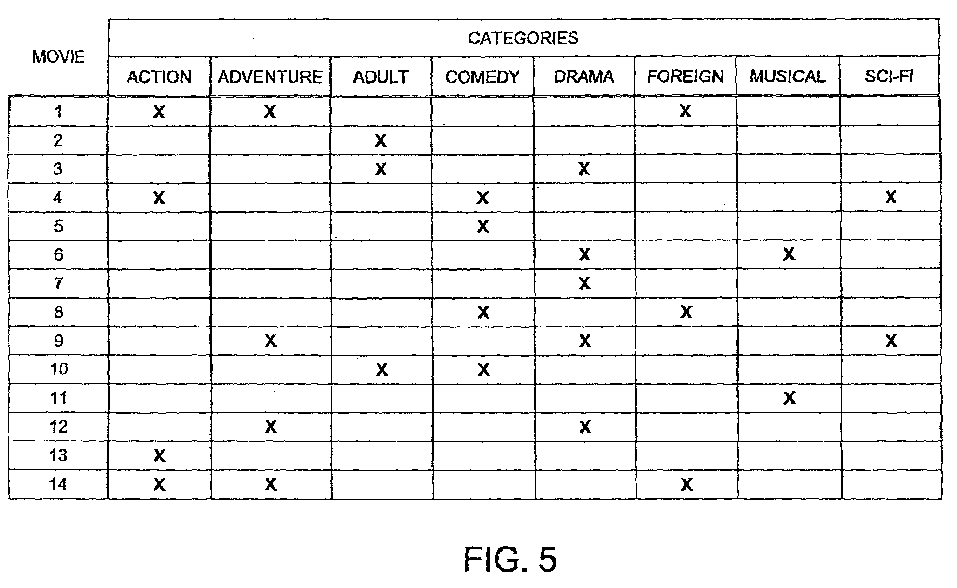

FIG. 5 is a table illustrating the categorization of a plurality of content, in this case fourteen movies, into one or more topical categories. The categories listed match those in the menu shown in FIG. 1 - although it is understood that other categories, such as romance, can be included. The category data for the movies may be stored in a look-up table that is consulted once the user makes the category choices described above. Movie 1, for instance, includes elements of action, adventure and is a foreign film and thus is listed under those top-level categories. Movie 7 has simply a single element, drama, and is thus listed with only that element.

FIG. 3 illustrates the selection of action, comedy and sci-fi topic elements that correspond in the table of FIG. 5 to movie 4.

FIG. 4 illustrates the selection of adventure and drama, elements that are included within more than one movie - movie 9, which also comprises sci-fi elements; and movie 12 which exactly corresponds only to those categories chosen. The system incorporating the invention can return for selected viewing those movies that include the elements selected (in which case the choice of either movies 9 and 12 would be displayed for selection by the user), or in the alternative the invention can return for selected viewing only those movies that exactly fit only the criteria selectcd (in which case only movie 12 would be accessible). Similarly, the system could return movies satisfying any one of the categories chosen, which would result in a user choice of movics 1, 3, 6, 7, 9, 12 and 14 being displayed.

FIG. 6 is a flow chart illustrating the preferred operation of the inventive method. The user is prompted in block 40 to select from top-level categories such as the topics shown in FIG. 1. Multiple categories may be selected as described below and the select button 18 in the screen menu 10 activated in query block 42 to proceed with a compilation of possible choices in block 44, A table, such as that shown in FIG. 5, is consulted to retrieve the content satisfying the criteria selected in earlier steps. If a single choice results, such as in the selection of the categories in FIG. 3 satisfied only by movie 4, then the method may proceed along the dashed line to the retrieval of the content from some database in block 46 and play in block 48. Retrieval can be by any means known in the art, such as over a wired or wireless network, from a local hard drive storage device, or off of a digital video disc (DVD) player.

This technique may be combined with the use of a selection submenu. The submenu may present a list of choices in block 50 similar in layout to that shown in FIG. I except with such choices as actor, director, location, or year. The available choices would be compiled by accumulating all the choices available for any item that satisfied the combined conditions of the category search. For example, if the category selection included 'Action' and 'Sci-Fi', a system which utilized a database containing the movies 'The Matrix' and 'Star Wars: Revenge of the Jedi' might display a submenu with an actors list including Harrison Ford, Mark Hamill and Keanu Reeves. Selection again of the activation button in block 52 causes the method to proceed, as by retrieval of the appropriate content in block 46 satisfying the selected top- and lower-level criteria. In the alternative, further lower-level lists can be presented to the user via a new menu to further winnow down the available choices.

This system is not simply limited to video-based works but could also be used for searching and selecting audio or multimedia selections. This approach could be applied to any search system that offers a category selection involving non-exclusive categories.

Having described and illustrated the principles of the invention in a preferred embodiment thereof, it should be apparent that the invention can be modified in arrangement and detail without departing from such principles. We claim all modifications and variation coming within the spirit and scope of the following claims.

## Claims

1. A method for selecting among multiply-categorized items, comprising:
associating for at least one of a plurality of media content items two or more top-level categories;
allowing selection by a user of two or more top-level categories from a list of categories; and
selecting for presentation to the user a list of only those media content items associated with all of the two or more top-level categories selected by the user.

2. The method of claim 1 wherein the list of top level categories includes at least four of the following; action, adventure, adult, comedy, drama, foreign, musical, romance and sci-fi.

3. The method of claim 1, further comprising the steps of:
associating with each of the plurality of media content one or more items from a submenu list; and
allowing selection by a user of one or more items from the submenu list; and
selecting for presentation to the user a list of only those media content items associated with all of the two or more top-level categories selected by the user that are also associated with the items selected from the submenu list.

4. The method of claim 3, wherein the step of allowing selection from the submenu list occurs after the step of allowing selection of the top-level categories.

5. The method of claim 4, wherein the step of allowing selection of items from the submenu list includes displaying the items to the user, wherein the items displayed is dependent upon the top-level categories selected by the user.

6. A method for selecting for display content of a display screen, the method comprising the steps of:
displaying a list of top-level categories on a display screen;
selecting at least two of the top-level categories from the list; and
presenting on the display screen content responsive to said selecting step.

7. The method of claim 6, further comprising the steps of:
selecting at least one item from a submenu list; and
presenting on the display screen data associated with said selected item and said selected top-level categories.

8. The method of claim 6, wherein the step of presenting on the display screen content responsive to said selecting step includes the step of displaying of list of content associated with all of said top-level categories selected from the list.

9. The method of claim 6, wherein the step of presenting on the display screen content responsive to said selecting step includes the step of displaying of list of content associated with exactly all of said top-level categories selected from the list.

10. The method of claim 6, wherein the step of presenting on the display screen content responsive to said selecting step includes the step of displaying a list of content associated with any one or more top-level categories selected from the list.
